(19) Europäisches Patentamt / European Patent Office / Office européen des brevets

(11) **EP 2 372 517 A2**

(12) **EUROPEAN PATENT APPLICATION**

(43) Date of publication:
**05.10.2011 Bulletin 2011/40**

(51) Int Cl.:
***G06F 3/048*** *(2006.01)*

(21) Application number: **11160469.0**

(22) Date of filing: **30.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.03.2010 KR 20100029336**

(71) Applicant: **SAMSUNG ELECTRONICS CO., LTD.
Suwon-si,
Gyeonggi-do (KR)**

(72) Inventors:
• **Lee, Chang-soo
  Chungcheongnam-do (KR)**
• **Kang, Kyung-Moon
  Busan (KR)**

(74) Representative: **Jenkins, Richard Gavin
Harrison Goddard Foote
106 Micklegate
York, Yorkshire Y01 6JX (GB)**

(54) **Touch screen apparatus and method for processing input of touch screen apparatus**

(57) A touch screen apparatus includes a touch screen and a processor. The touch screen displays a virtual keyboard including a plurality of keys. When a touch occurs on the virtual keyboard, the processor searches for a key corresponding to the position where the touch occurs, and magnifies and displays a plurality of keys existing in the neighborhood of the position where the touch occurs according to the search result.

FIG.5B

**Description**

**TECHNICAL FIELD OF THE INVENTION**

The present invention relates to a touch screen apparatus. More particularly, the present invention relates to a touch screen apparatus that reinforces a user's input convenience.

**BACKGROUND OF THE INVENTION**

A touch screen is an apparatus for detecting existence and/or a position of a touch within a display region. The touch screen is an apparatus designed such that when a human being's hand or an object touches on a character, a Graphic User Interface (GUI) object, or a specific position displayed on a screen, the apparatus detects the touched position to process a corresponding operation without using an input unit such as a keyboard or a mouse.

Such a touch screen is used widely more and more as a new input unit that can replace an input unit such as a mouse and a keyboard. Recently, as electronic apparatuses such as a mobile communication terminal and a computer are miniaturized, a touch screen is widely used even more as an input unit. A touch screen apparatus is an electronic device having a touch screen.

**SUMMARY OF THE INVENTION**

To address the above-discussed deficiencies of the prior art, it is a primary aspect of the present invention is to address at least the above-mentioned problems and/or disadvantages and to provide at least the advantages described below.

In accordance with an aspect of the present invention, a touch screen apparatus is provided. The apparatus includes a touch screen configured to display a virtual keyboard including a plurality of keys. The apparatus also includes a processor configured to determine whether to magnify and display one key or whether to magnify and display two or more keys of the plurality of keys when a touch occurs on the virtual keyboard.

Here, when a drag occurs on the magnified and displayed two or more keys, the processor may determine to visually differently display one of the magnified and displayed two or more keys according to a distance or a direction of the drag.

In accordance with another aspect of the present invention, when a release occurs from the visually differently displayed one key, the processor displays a symbol corresponding to the one key on a region of the touch screen that excludes the virtual keyboard.

In accordance with still another aspect of the present invention, when the touch occurs, the processor may receive a coordinate value corresponding to a position where the touch occurs from the touch screen. Here, the processor may search for a key corresponding to the position where the touch occurs. In addition, when the one key corresponding to the position where the touch occurs is found as a result of the search, the processor may magnify and display the found one key. When the one key corresponding to the position where the touch occurs is not found as a result of the search, the processor may determine two or more keys of the plurality of keys and magnify and display the two or more keys according to the position where the touch occurs and distances of the plurality of respective keys of the virtual keyboard.

In accordance with still another aspect of the present invention, the touch screen apparatus may further include a memory for storing ranges of valid regions corresponding to the plurality of respective keys of the virtual keyboard. At this point, the processor may search for a key corresponding to a valid region to which a coordinate value corresponding to the position where the touch occurs belongs when the touch occurs.

When the one key corresponding to the position where the touch occurs is not found as a result of the search, the processor may magnify and display a predetermined number of keys located at a distance close to the position where the touch occurs.

In accordance with still another aspect of the present invention, when the one key corresponding to the position where the touch occurs is not found as a result of the search, the processor may magnify and display a key located at a distance smaller than a predetermined distance from the position where the touch occurs.

In accordance with still another aspect of the present invention, the processor may receive a coordinate value corresponding to the position where the touch occurs from the touch screen when the touch occurs to determine whether the position where the touch occurs is a valid region. When the position where the touch occurs is the valid region as a result of the determination, the processor may magnify and display one key corresponding to the position where the touch occurs. When the position where the touch occurs is not the valid region as a result of the determination, the processor may determine two or more keys of the plurality of keys and magnify and display the two or more keys according to the position where the touch occurs and distances of the plurality of respective keys of the virtual keyboard.

In accordance with still another aspect of the present invention, the touch screen apparatus may further include a memory for storing ranges of valid regions corresponding to the plurality of respective keys of the virtual keyboard. At this point, the processor may determine whether the position where the touch occurs is the valid region by determining that a coordinate value corresponding to the position where the touch occurs is a coordinate within the range of the valid region when the touch occurs.

Here, when the position where the touch occurs is not the valid region as a result of the determination, the processor may magnify and display a predetermined number of keys located at a distance close to the position where the touch occurs.

In accordance with still another aspect of the present invention, when the position where the touch occurs is not the valid region as a result of the determination, the processor may magnify and display a key located at a distance smaller than a predetermined distance from the position where the touch occurs.

In accordance with still another aspect of the present invention, the processor may magnify and display two or more keys of the plurality of keys around an anchor point existing between the two or more keys.

Here, the anchor point existing between the two or more keys may be a closest anchor point of anchor points existing within a predetermined distance from the position where the touch occurs.

In accordance with still another aspect of the present invention, a touch screen apparatus is provided. The apparatus includes a touch screen configured to display a plurality of selection items. The apparatus also includes a processor configured to determine whether to magnify and display one selection item or whether to magnify and display two or more selection items of the plurality of selection items when a touch occurs on the touch screen.

Here, when a drag occurs on the magnified and displayed two or more keys, the processor may determine to visually differently display one of the magnified and displayed two or more keys according to a distance or a direction of the drag.

In accordance with still another aspect of the present invention, when a drag occurs on the magnified and displayed two or more selection items, the processor may change a display regarding some of the magnified and displayed two or more selection items according to a distance or a direction of the drag. At this point, the processor may change color or light and shade of some of selection items.

In accordance with still another aspect of the present invention, when the number of selection items is one and a release occurs on the one selection item, the processor may process that the one selection item has been selected.

In accordance with still another aspect of the present invention, when the touch occurs, the processor may receive a coordinate value corresponding to the position where the touch occurs from the touch screen to search for a selection item corresponding to the position where the touch occurs. When one selection item corresponding to the position where the touch occurs is found as a result of the search, the processor may process that the selected one selection item has been selected. When one selection item corresponding to the position where the touch occurs is not found as a result of the search, the processor may determine two or more selection items of the plurality of selection items and magnify and display the two or more selection items according to the position where the touch occurs and distances of the plurality of respective selection items.

In accordance with still another aspect of the present invention, the touch screen apparatus may further include a memory for storing a range of a valid region corresponding to the plurality of respective selection items. At this point, the processor may search for a selection item corresponding to a valid region to which a coordinate value corresponding to the position where the touch occurs belongs when the touch occurs.

In accordance with still another aspect of the present invention, when one selection item corresponding to the position where the touch occurs is not found as a result of the search, the processor may magnify and display a predetermined number of selection items located at a distance close to the position where the touch occurs.

Here, when one selection item corresponding to the position where the touch occurs is not found as a result of the search, the processor may magnify and display a selection item located at a distance smaller than a predetermined distance from the position where the touch occurs.

In accordance with still another aspect of the present invention, the processor may receive a coordinate value corresponding to the position where the touch occurs from the touch screen when the touch occurs to determine whether the position where the touch occurs is the valid region. When the position where the touch occurs is the valid region as a result of the search, the processor may process that one selection item corresponding to the position where the touch occurs has been selected. When the position where the touch occurs is not the valid region as a result of the search, the processor may determine two or more selection items of the plurality of selection items to magnify and display the two or more selection items according to the position where the touch occurs and distances of the plurality of respective selection items.

In accordance with still another aspect of the present invention, the touch screen apparatus may further include a memory configured to store a range of a valid region corresponding to the plurality of respective selection items of the virtual keyboard. The processor may determine whether the position where the touch occurs is the valid region by determining whether a coordinate value corresponding to the position where the touch occurs is a coordinate within a range of the valid region when the touch occurs.

In accordance with still another aspect of the present invention, when the position where the touch occurs is not the valid region as a result of the determination, the processor may magnify and display a predetermined number of selection items located at a distance close to the position where the touch occurs.

In accordance with still another aspect of the present invention, when the position where the touch occurs is not the valid region as a result of the determination, the processor may magnify and display a selection item located at a distance smaller than a predetermined distance from the position where the touch occurs. Here, the selection item may be at least one of an URL link, a key of a virtual keyboard, an icon, an item of a menu, an item of a list box, and an item of a combo box.

In accordance with still another aspect of the present invention, a method for processing an input in a touch screen apparatus is provided. The method includes displaying a virtual keyboard including a plurality of keys, and determining whether to magnify and display one key or whether to magnify and display two or more keys of the plurality of keys when a touch occurs on the virtual keyboard.

In accordance with still another aspect of the present invention, the method may further include storing a range of a valid region corresponding to the plurality of respective selection items of the virtual keyboard in a memory. Here, the determining may include, when the touch occurs, receiving a coordinate value corresponding to the position where the touch occurs from the touch screen, and when the position where the touch occurs is not the valid region, determining to magnify and display two or more keys of the plurality of keys.

In accordance with still another aspect of the present invention, a method for processing an input in a touch screen apparatus is provided. The method includes displaying a plurality of selection items on a touch screen, and when a touch occurs on the touch screen, determining whether to magnify and display one selection item or whether to magnify and display two or more selection items of the plurality of selection items when a touch occurs on the touch screen.

In accordance with still another aspect of the present invention, the determining may include, when the touch occurs, receiving a coordinate value corresponding to the position where the touch occurs from the touch screen to search for a selection item corresponding to the position where the touch occurs, and when the selection item corresponding to the position where the touch occurs is not found as result of the search, magnifying and displaying two or more selection items of the plurality of selection items.

In accordance with still another aspect of the present invention, a touch screen apparatus is provided. The apparatus includes a touch screen for displaying a virtual keyboard including a plurality of keys, and a processor for, when a touch occurs on the virtual keyboard, searching for a key corresponding to the position where the touch occurs according to the position where the touch occurs and distances of the plurality of keys of the virtual keyboard, and magnifying and displaying a plurality of keys existing in a neighborhood of the position where the touch occurs as a result of the search.

Here, when a drag occurs on the plurality of magnified and displayed keys, the processor may indicate one of the plurality of magnified and displayed keys according to a distance and/or a direction of the drag. At this point, the processor may visually differently display one of the plurality of magnified and displayed keys. When a release occurs on the visually differently displayed one key, a symbol corresponding to the one key may be displayed on a region of the touch screen excluding the virtual keyboard.

In accordance with still another aspect of the present invention, when one key corresponding to the position is found as a result of the search, the processor may magnify and display the found one key. At this point, when a plurality of keys of the virtual keyboard located at a distance smaller than a predetermined distance from the position where the touch occur exist, the processor may magnify and display the plurality of keys of the virtual keyboard.

In accordance with still another aspect of the present invention, the processor may magnify and display the plurality of keys around an anchor point existing between the plurality of keys. The anchor point existing between the plurality of keys may be a closest anchor point of anchor points existing within a predetermined distance from the position where the touch event occurs.

In accordance with still another aspect of the present invention, a touch screen apparatus is provided. The apparatus includes a touch screen for displaying a plurality of selection items, and a processor for, when a touch occurs on the touch screen, determining a selection item corresponding to a position where the touch occurs according to the position where the touch occurs and a distance between the plurality of selection items, and when the determined two or more selection items exist, changing display regarding the two or more selection items.

Here, when the determined two or more selection items exist, the processor may magnify and display the two or more selection items. At this point, when a drag occurs on the magnified and displayed two or more selection items, the processor may change a display regarding some of the magnified and displayed two or more selection items according to a direction and a distance of the drag. At this point, the processor may change and display color or light and shade of the some selection items.

In accordance with still another aspect of the present invention, when the some selection item is one and a release occurs on the some selection item, the processor may process that the some selection item has been selected.

In accordance with still another aspect of the present invention, when one selection item is determined, the processor may perform an operation corresponding to the determined one selection item. Here, the processor may determine a selection item located at a distance smaller than a predetermined distance from the position where the touch occur as the selection item corresponding to the position where the touch occurs. At this point, the selection item may be at least one of an URL link, a key of a virtual keyboard, an icon, an item of a menu, an item of a list box, an item of a combo box.

In accordance with still another aspect of the present invention, a touch screen apparatus is provided. The apparatus includes a touch screen for displaying a virtual keyboard including a plurality of keys, and a processor for determining whether to magnify and display one key or whether to magnify and display two or more keys of the plurality of keys when a touch occurs on the virtual keyboard.

In accordance with still another aspect of the present invention, the processor may receive a coordinate value corresponding to a position where the touch occurs from the touch screen when the touch occurs to search for a key corresponding to the position where the touch occurs. When the key corresponding to the position where the touch occurs is found as a result of the search, the processor may magnify and display the found key. Alternatively, when the key corresponding to the position where the touch occurs is not found as a result of the search, the processor may determine to magnify and display two or more keys of the plurality of keys. Here, the magnified and displayed two or more keys may be determined according to the position where the touch occurs and distances of the plurality of respective keys of the virtual keyboard. At this point, it is determined that the magnified and displayed two or more keys are located at a distance smaller than a predetermined distance from the position where the touch occurs.

In accordance with still another aspect of the present invention, it may be determined that the magnified and displayed two or more keys are selected in a sequence such that distances of the plurality of respective keys from the position where the touch occurs decrease.

In accordance with still another aspect of the present invention, when a drag occurs on the magnified and displayed two or more keys, the processor may determine to indicate one of the magnified and displayed two or more keys according to a distance or a direction of the drag. Here, the processor may visually differently display one of the magnified and displayed two or more keys.

In accordance with still another aspect of the present invention, when a release occurs on the visually differently displayed one key, the processor may display a symbol corresponding to the one key on a region of the touch screen excluding the virtual keyboard.

In accordance with still another aspect of the present invention, a touch screen apparatus is provided. The apparatus includes a touch screen for displaying a virtual keyboard including a plurality of keys, and a processor for, when a touch occurs on the virtual keyboard, determining to whether to magnify and display one key or whether to magnify and display two or more keys of the plurality of keys. Here, the processor searches for a key corresponding to the position where the touch occurs. When the key corresponding to the position where the touch occurs is not found as a result of the search, the processor may determine to magnify and display two or more keys of the plurality of keys. The magnified and displayed two or more keys may be determined according to the position where the touch occurs and distances of the plurality of respective keys of the virtual keyboard. Alternatively, it may be determined that the magnified and displayed two or more keys are located at a distance smaller than a predetermined distance from the position where the touch occurs. Alternatively, it may be determined that the magnified and displayed two or more keys are N (N is an integer equal to or greater than 2) selected in a sequence such that distances of the plurality of respective keys from the position where the touch occurs decrease.

In accordance with still another aspect of the present invention, when a drag occurs on the magnified and displayed two or more keys, the processor may determine to indicate one of the magnified and displayed two or more keys according to a distance and a direction of the drag. At this point, the processor may visually differently display the one of the magnified and displayed two or more keys. When a release occurs on the visually differently displayed one key, the processor may display a symbol corresponding to the one key on a region of the touch screen excluding the virtual keyboard.

In accordance with still another aspect of the present invention, a touch screen apparatus is provided. The apparatus includes a touch screen for displaying a plurality of selection items, and a processor for determining whether to magnify and display one selection item or whether to magnify and display two or more selection items of the plurality selection items when a touch occurs on the touch screen. Here, the processor may receive a coordinate value corresponding to a position where the touch occurs from the touch screen when the touch occurs to determine whether the position where the touch occurs is a valid region. When the position is included in the valid region as a result of the determination, the processor may select a selection item corresponding to the position where the touch occurs. When the position is not included in the valid region as a result of the determination, the processor may determine to magnify and display two or more selection items existing in the neighborhood of the position where the touch occurs.

When a drag occurs on the magnified and displayed two or more selection items, the processor may change a display regarding some of the magnified and displayed two or more selection items. For example, the processor may change color or light and shade of the some selection items. At this point, the selection items may be at least one of an URL link, a key of a virtual keyboard, an icon, an item of a menu, an item of a list box, and an item of a combo box.

In accordance with still another aspect of the present invention, a method for processing an input in a touch screen apparatus is provided. The method includes displaying a virtual keyboard including a plurality of keys on a touch screen, detecting a touch that occurs on the virtual keyboard displayed on the touch screen, when the touch is detected, searching for a key corresponding to a position where the touch occurs according to the position and distances of the plurality of respective keys of the virtual keyboard, and magnifying and displaying a plurality of keys in the neighborhood of the position where the touch occurs according to the search result.

In accordance with still another aspect of the present invention, the method may further include determining whether a drag occurs on the magnified and displayed plurality of keys, and when the drag occurs, indicating one of the magnified and displayed plurality of keys according to a distance and direction of the drag.

In accordance with still another aspect of the present invention, the indicating may be visually differently displaying the one of the magnified and displayed keys.

In accordance with still another aspect of the present invention, the method may further include, when a release occurs on the visually differently displayed one key, displaying a symbol corresponding to the one key on a region of the touch screen excluding the virtual keyboard.

In accordance with still another aspect of the present invention, the method may further include, when one key corresponding to the position is found as a result of the search, magnifying and displaying the found key.

In accordance with still another aspect of the present invention, a method for processing an input in a touch screen apparatus is provided. The method includes, when a plurality of keys of the virtual keyboard located at a distance smaller than a predetermined distance from the position where the touch occurs exist, magnifying and displaying the plurality of keys of the virtual keyboard.

In accordance with still another aspect of the present invention, a method for processing an input in a touch screen apparatus is provided. The method includes displaying a plurality of selection items on a touch screen, detecting a touch occurring on the touch screen, when the touch occurs, determining a selection item corresponding to the position where the touch occurs and a distance between the plurality of selection items, and when two or more determined selection items exist, changing displaying regarding the two or more selection items.

In accordance with still another aspect of the present invention, the method may further include, when the two or more determined selection items exist, magnifying and displaying the two or more selection items.

In accordance with still another aspect of the present invention, the method may further include determining whether a drag occurs on the magnified and displayed two or more selection items, and when the drag occurs, changing display regarding some of the magnified and displayed two or more selection items according to a direction and a distance of the drag.

In accordance with still another aspect of the present invention, the changing of the display regarding some of the magnified and displayed two or more selection items may be changing color or light and shade of some selection items.

In accordance with still another aspect of the present invention, the method may further include, when one selection item is determined, performing an operation corresponding to the determined one selection item.

In accordance with still another aspect of the present invention, in the method, a selection item located at a distance smaller than a predetermined distance from the position where the touch occurs may be determined as the selection item corresponding to the position where the touch occurs.

In accordance with still another aspect of the present invention, a method for processing an input in a touch screen apparatus is provided. The method includes displaying a virtual keyboard including a plurality of keys on a touch screen, detecting a touch occurring on the virtual keyboard, and when the touch occurs, determining whether to magnify and display one of the plurality of keys, or whether to magnify and display two or more keys of the plurality of keys.

In accordance with still another aspect of the present invention, a method for processing an input in a touch screen apparatus is provided. The method includes, when the touch is detected, receiving a coordinate value corresponding to a position where the touch occurs from the touch screen, searching for a key corresponding to the position where the touch occurs using the received coordinate value, and when the key corresponding to the position where the touch occurs is found as a result of the search, magnifying the found key, or when the key corresponding to the position where the touch occurs is not found as a result of the search, magnifying and displaying two or more keys in the neighborhood of the position where the touch occurs among the plurality of keys.

In accordance with still another aspect of the present invention, the method may further include determining whether a drag occurs on the magnified and displayed two or more keys, and when the drag occurs, indicating one of the magnified and displayed two or more keys according to a distance and a direction of the drag.

In accordance with still another aspect of the present invention, a method for processing an input in a touch screen apparatus is provided. The method includes displaying a plurality of selection items on a touch screen, detecting a touch occurring on the touch screen, and when the touch is detected, determining whether to magnify and display one selection item of the plurality of selection items, or whether to magnify and display two or more selection items of the plurality of selection items.

In accordance with still another aspect of the present invention, the method may further include, when the touch is detected, receiving a coordinate value corresponding to the position where the touch occurs from the touch screen, determining whether the position where the touch occurs is a valid region, when the position is included in the valid region as a result of the determination, selecting a selection item corresponding to the position where the touch occurs, or when the position is not included in the valid region as a result of the determination, magnifying and displaying two or more selection items in the neighborhood of the position where the touch occurs.

In accordance with still another aspect of the present invention, the method may further include, when a drag occurs on the magnified and displayed two or more selection items, changing display regarding some of the magnified and displayed two or more selection items.

In accordance with still another aspect of the present invention, a method for processing an input in a touch screen apparatus is provided. The method includes displaying a plurality of selection items on a touch screen, detecting a touch occurring on the touch screen, when a selection item corresponding to the touch is determined to be one item based on the position where the touch occurs and a position between the plurality of selection items, magnifying and displaying the determined selection item, and when the selection item corresponding to the touch is determined not to be one item based on the position where the touch occurs and a position between the plurality of selection items, magnifying and displaying two or more selection items located in the neighborhood of the position where the touch occurs.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a touch screen apparatus according to an embodiment of the present invention;

FIGURE 2 illustrates a process for processing a user input using a touch screen apparatus according to an embodiment of the present invention;

FIGURES 3A and 3B illustrate a touch screen where a virtual keyboard is displayed according to an embodiment of the present invention;

FIGURES 4A and 4B illustrate a method for processing a user input using a virtual keyboard on a touch screen according to an embodiment of the present invention;

FIGURES 5A through 5C illustrate a method for processing a user input using a virtual keyboard on a touch screen according to an embodiment of the present invention;

FIGURES 6A and 6B illustrate a user touching an edge of a virtual keyboard region according to an embodiment of the present invention;

FIGURES 7A and 7B illustrate a process for magnifying and displaying on a touch screen according to an embodiment of the present invention;

FIGURE 8 illustrates a process for processing a user input using a touch screen apparatus according to an embodiment of the present invention; and

FIGURES 9A and 9B illustrate a method for processing a user input that selects one of a plurality of selection items on a touch screen where the plurality of selection items are displayed according to an embodiment of the present invention.

Throughout the drawings, like reference numerals will be understood to refer to like parts, components and structures.

## DETAILED DESCRIPTION OF THE INVENTION

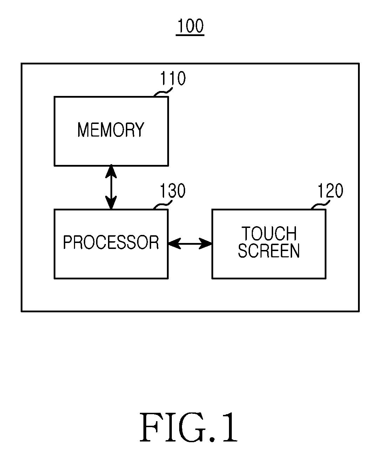

FIGURES 1 through 9B, discussed below, and the various embodiments used to describe the principles of the present disclosure in this patent document are by way of illustration only and should not be construed in any way to limit the scope of the disclosure.

FIGURE 1 illustrates a touch screen apparatus according to an embodiment of the present invention.

As shown in FIGURE 1, the touch screen apparatus 100 may include a memory 110, a touch screen 120, and a processor 130.

The memory 110 is a unit for storing a program and/or data. For example, the memory 110 may be Read Only Memory (ROM), Random Access Memory (RAM), a flash memory, a hard disk, an optical disk, and the like. According to an embodiment of the present invention, the memory 110 may store a symbol corresponding to a plurality of respective keys forming a virtual keyboard. For example, the memory 110 may store an upper case alphabet, a lower case alphabet, numbers, special characters, and the like.

According to an embodiment of the present invention, the memory 110 may store a range of a valid region corresponding to the plurality of respective keys forming the virtual keyboard. Each of the plurality of keys forming the virtual keyboard occupies a valid region corresponding to each key on the touch screen 120. The memory 110 may store the range of the valid region, for example, a coordinate value. For example, a valid region of a key 'Q' corresponds to a coordinate [(50<x<95), (200<y<245)] on the touch screen 120, and a valid region of a key 'W' corresponds to a coordinate [(100<x<145), (200<y<245)] on the touch screen 120. The range of the coordinate value on the touch screen 120 corresponding to the respective keys may be stored in the memory 110.

The touch screen 120 may display a GUI so that an interface between a user of the touch screen apparatus 100 and an application executed on the touch screen apparatus 100 is easy. Generally, the GUI is allowed to perform a user interface using a graphic image. Graphic images may include a window, a field, a dialog box, a menu, an icon, a button, a cursor, a scroll bar, and the like. These images may be arranged in a scheduled layout, or may be dynamically generated to help various actions taken by a user. During an operation, a user may select and activate various graphic images in order to start related functions and jobs. For example, a user may select a button for opening, closing, minimizing, or maximizing a window, or an icon for starting a program. In addition, when a human being's hand or an object touches on the GUI displayed on the screen, the touch screen 120 detects the position to perform a process corresponding thereto using a stored software. The touch screen 120 may receive a touch input from a user and inform the processor 130 that a touch has occurred.

According to an embodiment of the present invention, the touch screen 120 detects not only the touch but also the position and/or size of a point where the touch occurs. When the touch occurs, the touch screen 120 outputs a coordinate value of the point where the touch occurs to the processor 130. Here, the coordinate value may be a coordinate (x,y) or a polar coordinate. In addition, the touch screen 120 may display data or an operation state of an electronic apparatus and/or a plurality of information using an icon and/or a letter under control of the processor 130. According to an embodiment of the present invention, the touch screen 120 may display a key that can receive a letter or a plurality of selection items which a user may select, and receive a touch, a drag, and/or a release operation from the user under control of the processor 130. Here, the release operation is an operation for releasing the touch.

The processor 130 may allocate the plurality of letters stored in the memory 110 to the keys of the virtual keyboard displayed on the touch screen 120, respectively, and display the same. In addition, the processor 130 may output a letter corresponding to a selected key to the touch screen 120 according to an operation of a touch, a release, or a drag that occurs on the touch screen 120.

When a touch occurs on the virtual keyboard on the touch screen 120, the processor 130 may search for a key corresponding to the position where the touch occurs. The processor 130 may magnify and display a plurality of keys in the neighborhood of the position where the touch occurs according to the search result. For example, when a plurality of keys of the virtual keyboard located at a distance smaller than a predetermined distance from the position where the touch occurs exist, the processor 130 may magnify and display the plurality of keys of the virtual keyboard.

According to an embodiment of the present invention, the processor 130 may magnify and display a predetermined number of keys located no more than a predetermined distance from the position where the touch occurs.

According to an embodiment of the present invention, when a touch occurs on the virtual keyboard, the processor 130 determines whether to magnify and display one key or whether to magnify and display two or more keys of the plurality of keys.

When a touch occurs on the touch screen 120, the processor 130 may determine a selection item corresponding to the position where the touch occurs. The selection item is an item that can be selected by a user on the touch screen 120. The selection item may include an URL link, a key of the virtual keyboard, an icon, an item of a menu, an item of a list box, an item of a combo box, and the like. When two or more selection items corresponding to the position where the touch occurs are determined, the processor 130 may change a display regarding the two or more selection items. For example, the processor 130 may magnify and display the two or more selection items.

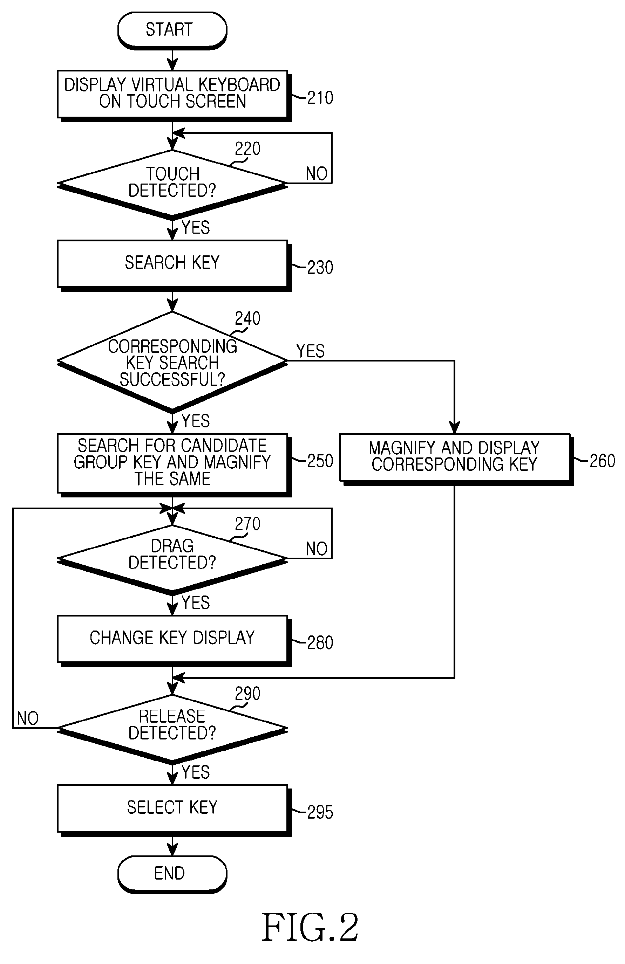

FIGURE 2 illustrates a process for processing a user input using a touch screen apparatus according to an embodiment of the present invention.

As shown in FIGURE 2, the processor controls the touch screen to display a virtual keyboard including a plurality of keys in step 210. At this point, the processor obtains data for displaying the virtual keyboard including consonants and vowels of Hangul, upper case and lower case letters of an alphabet, numbers, special characters, or icons displayed on the virtual keyboard from the memory, and then controls the touch screen to display the virtual keyboard using the obtained data. Here, the virtual keyboard may be the general QWERTY keyboard or a Hangul input keyboard on which a numerical keypad, consonants and vowels of Hangul are displayed. The virtual keyboard may be provided in various forms depending on realization.

The processor determines whether a touch occurs on the touch screen in step 220. When detecting the touch on the touch screen, the processor proceeds to step 230. When the touch occurs on the virtual keyboard, the processor may determine whether to magnify and display one key or whether to magnify and display two or more keys of the plurality of keys. For example, when the touch occurs on the touch screen, the touch screen outputs a coordinate value of the touch point and sends the same to the processor. Here, the coordinate value may be x and y coordinates or polar coordinates. When not detecting the touch in step 220, the processor may stand by until a touch occurs or perform a predetermined operation.

The processor searches for a key corresponding to the position where the touch occurs in step 230. When the touch occurs, the processor may receive a coordinate value corresponding to the position where the touch occurs to search for a key corresponding to the position where the touch occurs. When the key corresponding to the position where the touch occurs is found as a result of the search, the processor may magnify and display the found one key. When the key corresponding to the position where the touch occurs is not found as a result of the search, the processor may determine two or more keys of the plurality of keys according to the position where the touch occurs and distances of the plurality of respective keys of the virtual keyboard to magnify, and then display the two or more keys.

In addition, the processor may search for a key according to the position where the touch occurs and distances of the plurality of respective keys of the virtual keyboard.

The respective keys forming the virtual keyboard may include a predetermined valid region of the touch screen. Ranges of valid regions corresponding to the plurality of respective keys of the virtual keyboard may be stored in the memory. That is, data representing the ranges of the valid regions corresponding to the plurality of respective keys of the virtual keyboard may be stored in the memory. According to an embodiment of the present invention, the memory 110 may store the ranges of the valid regions corresponding to the plurality of respective keys forming the virtual keyboard. Each of the plurality of keys forming the virtual keyboard occupies a valid region corresponding to each key on the touch screen 120. The memory 110 may store the range of the valid region, for example, a coordinate value. For example, a valid region of a key 'Q' corresponds to a coordinate [(50<x<95), (200<y<245)] on the touch screen 120, and a valid region of a key 'W' corresponds to a coordinate [(100<x<145), (200<y<245)] on the touch screen 120. The range of the coordinate value on the touch screen 120 corresponding to the respective keys may be stored in the memory 110.

The processor may compare a coordinate value received from the touch screen with valid region data corresponding to each key stored in the memory to search for a key corresponding to the position where the touch occurs. For example, when a coordinate of a point touched by a user is (x_user, y_user) and keys forming the virtual keyboard are key(1), key(2), key(3),...key(n), the processor determines whether the coordinate (x_user, y_user) of the point where the touch occurs is included in the valid region of key(1).

The processor determines whether a search of the key corresponding to the position where the touch occurs has been successful in step 240. When the search of one key corresponding to the position where the touch occurs has been successful as a result of the search in step 240, the processor magnifies and displays the corresponding one key on the touch screen in step 260. For example, when (x_user, y_user) is included in the valid region of key(1) as a result of the search in step 240, the processor magnifies and displays key(1) on the touch screen in step 260.

The processor searches for a key corresponding to the position where the touch is detected (step 230). When one key corresponding to the position where the touch occurs is not found as a result of the search, the processor proceeds to step 250. When the key corresponding to the position where the touch occurs is not found as a result of the determination in step 240, the processor may magnify and display a predetermined number of keys located at a distance close to the position where the touch occurs. Alternatively, the processor may magnify and display a key located at a distance smaller than a predetermined distance from the position where the touch occurs. For example, the processor may determine to magnify and display two or more keys of the plurality of keys forming the virtual keyboard. Here, the magnified and displayed two or more keys may be determined according to the position where the touch occurs and distances of the plurality of respective keys of the virtual keyboard. For example, when a coordinate (x_user, y_user) is not included in the valid region of key(1), the processor determines whether the coordinate (x_user, y_user) is included in the valid region of key(2). Likewise, the processor performs comparisons up to the valid region of key(n) to search for a corresponding key.

When the corresponding key is not found even though the search has been made up to the valid region of key (n), the processor determines that the touch coordinate (x_user, y_user) is not included in the valid region. That is, the processor may determine that a coordinate of the point where the touch occurs is included in an invalid region and perform step 250.

According to an embodiment of the present invention, the processor may perform step 250 even when a plurality of keys corresponding to the position where the touch occurs are found.

According to an embodiment of the present invention, when a touch occurs on the virtual keyboard in step 220, the processor may determine whether to magnify and display one key or whether to magnify and display two or more keys of a plurality of keys in step 240. When determining to magnify and display one key in step 240, the processor may proceed to step 260. When determining to magnify and display two or more keys of the plurality of keys in step 240, the processor may proceed to step 250. For example, when a key corresponding to the position where the touch occurs is not found as a result of the search in step 230, the processor may magnify and display two or more keys of the plurality of keys in step 250.

The processor may magnify and display a plurality of keys in the neighborhood of the position where the touch occurs on the touch screen in step 250. The magnified and displayed plurality of keys may be determined depending on the position where the touch occurs and distances of the plurality of respective keys. For example, it may be determined that the magnified and displayed plurality of keys are located at a distance smaller than a predetermined distance from the position where the touch occurs. Alternatively, the magnified and displayed plurality of keys may be a predetermined number of keys located at a distance close to the position where the touch occurs. For example, N keys (N is an integer equal to or greater than 2) may be selected in a sequence such that distances of the plurality of keys from the position where the touch occurs decrease.

According to an embodiment of the present invention, the processor may determine a candidate group of keys to be magnified and displayed on the screen, and then magnify and display the determined keys on the touch screen. According to an embodiment of the present invention, for the determination, the processor determines a touch point coordinate value (x_user, y_user) and distances d up to center point coordinates of respective keys of the virtual keyboard.

When the center point coordinates of respective keys are (x_key[1], y_key[1]), (x_key[2], y_key[2]), (x_key[3], y_key[3]),...,(x_key[n], y_key[n]), the processor obtains distances between the center point coordinates of all keys of the virtual keyboard and the coordinate value of the point touched by a user using Equation 1.

$$d[n]=sqrt(abs(x\_key[n]-x\_user)^2 + abs(y\_key[n]-y\_user)^2) \quad [Eqn. 1]$$

where abs () is an absolute value, and sqrt() is a square root.

For example, a distance between key(1) and a touch point (x_user, y_user) is d[1]=sqrt(abs(x_key[1]-x_user)^2 +abs(y_key[1]-y_user)^2), a distance between key(2) and a touch point (x_user, y_user) is d[2]=sqrt(abs(x_key(2)-x_user)^2 +abs(y_key[2]-y_user)^2), a distance between key(3) and a touch point (x_user, y_user) is d[3]=sqrt(abs(x_key[3]-x_user)^2 +abs(y_key[3]-y_user)^2, and a distance between key(n) and a touch point (x_user, y_user) is d[n]=sqrt(abs(x_key[n]-x_user)^2 +abs(y_key[n]-y_user)^2.

Assuming that the number of keys to be magnified and displayed is m, the processor may control to select m in a sequence such distances decrease from distances d[1], d[2],d[3],...d[n] between a coordinate (x_user, y_user) of a point touched by a user and center point coordinate values of respective key regions, and magnify and display a key corresponding to the selected distance on the touch screen. For example, when d[1]<d[n-1]<d[3]<d[n-5]< ... and the number of keys to be magnified and displayed is m=3, the processor may select d[1], d[n-1], and d[3], and determine three keys corresponding thereto as a candidate group, and magnify and display the same on the touch screen.

In addition, the processor may control to select keys located within a predetermined distance among distances d[1], d[2], d[3],..., d[n] between a coordinate (x_user, y_user) of a touched point and center point coordinates of respective key regions, and magnify and display the same on the touch screen. For example, when the predetermined distance is 15 pixels, the processor may determine keys whose center point coordinates are located within a distance of 15 pixels from the touch point coordinate (x_user, y_user) as a candidate group, and magnify and display the same on the touch screen.

Here, to magnify and display the keys on the touch screen, the processor may display a key having a second size greater than the original key size on the touch screen.

In addition, when a drag occurs on the magnified and displayed plurality of keys, the processor determines to indicate one of the magnified and displayed plurality of keys according to a distance and/or a direction of the drag. Here, the processor may visually display the one key differently from the other magnified and displayed keys.

The processor determines whether a drag occurs on the magnified and displayed plurality of keys in step 270. The processor may determine whether a drag is detected on the touch screen with a candidate group key magnified and displayed. The drag is an operation that moves a touch point without releasing the touch when the touch occurs.

When the drag occurs on the magnified and displayed plurality of keys, the processor indicates one of the magnified and displayed plurality of keys according to a distance and/or a direction of the drag in step 280. At this point, the processor may visually display one of the magnified and displayed keys differently. For example, when detecting the drag, the processor may further enlarge the size, change the color, or change the brightness in order to visually discriminate the key corresponding to the position at which the drag stops from magnified and displayed other keys in step 280.

The processor determines whether a release that releases a touch occurs in step 290. When a release occurs from the one key that is visually displayed differently from the other magnified and displayed keys, the processor finally selects a key corresponding to the position where the release occurs in step 295.

Though not shown in FIGURE 2, when a release occurs from the one key visually displayed differently, the processor may display a symbol corresponding to the one key on a region of the touch screen excluding the virtual keyboard. That is, the processor may display the symbol corresponding to the finally selected key on a different region of the touch screen excluding the virtual keyboard. For example, when the finally selected key is 'A', the processor displays a symbol 'A' corresponding to the key 'A' on a different region of the touch screen excluding the virtual keyboard.

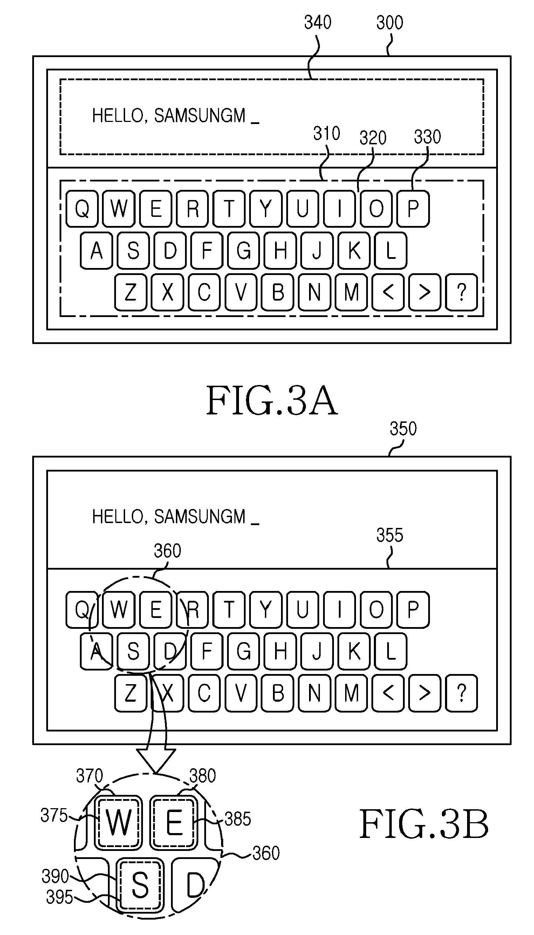

FIGURE 3A illustrates a touch screen 300 on which a virtual keyboard 310 is displayed according to an embodiment of the present invention.

As shown in FIGURE 3A, the touch screen 300 is divided into a virtual keyboard region 310 which can receive a key input from a user, represented by an alternate long and short dash line, and a symbol display region 340 for displaying a symbol corresponding to a key finally selected from the virtual keyboard, represented by a dotted line.

The virtual keyboard region includes one or more valid regions 330 displayed by a rounded quadrangle having a region of a predetermined size, and an invalid region 320 defined as an empty space between valid regions. Though reference numerals are exemplarily given to only the valid region 330 corresponding to 'P' in FIGURE 3, the valid regions correspond to all key regions forming the virtual keyboard. In addition, a symbol such as an alphabet, a number, a consonant and a vowel of Hangul, or an icon corresponding to each key may be marked inside the valid region. A user may see a marked symbol and input a desired key. Here, when a coordinate of a point touched by a user is included in the valid region, the processor displays a symbol corresponding to a key on the symbol display region 340. When a coordinate of a point touched by a user is included in the invalid region 320, the processor magnifies and displays m keys (m is an integer equal to or greater than 2) on the touch screen according to the flowchart of FIGURE 2.

FIGURE 3B is a view illustrating a touch screen 350 on which a virtual keyboard 355 is displayed according to an embodiment of the present invention. A partial region 360 is magnified in FIGURE 3B. In the virtual keyboard 355, a key 370 and a key 380 are adjacent to each other. The valid region of the key 370 includes a virtual region 375. The valid region of the key 380 is a region 385, and the valid region of the key 390 is a region 395. Likewise, valid regions corresponding to all keys forming the virtual keyboard 355 are set smaller than the regions where the keys are actually displayed.

For example, when a point where a touch occurs is between the region 375 and the region 385, the processor magnifies and displays 'W' and 'E' on the touch screen.

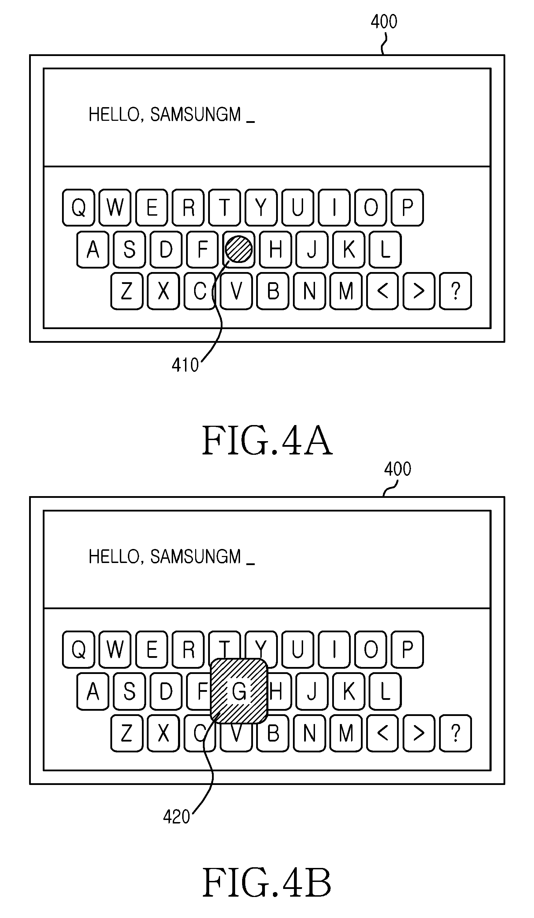

FIGURES 4A and 4B illustrate a method for processing a user input using a virtual keyboard on a touch screen according to an embodiment of the present invention.

As shown in FIGURE 4A, when a user touches an inside 410 of a valid key region of the virtual keyboard which is marked by a circle, a symbol corresponding to a key is magnified and displayed as in FIGURE 4B. In an embodiment of the present invention, a user touches the inside 410 of a key region 'G' of the virtual keyboard, and accordingly, the processor controls the touch screen to magnify and display (420) the symbol 'G'. When a touch occurs on the virtual keyboard, the processor may search for a key corresponding to the position where the touch occurs. In addition, the processor may determine whether to magnify and display one key or whether to magnify and display a plurality of keys depending on the search result. FIGURE 4 illustrates an embodiment where the processor determines to magnify and display one key.

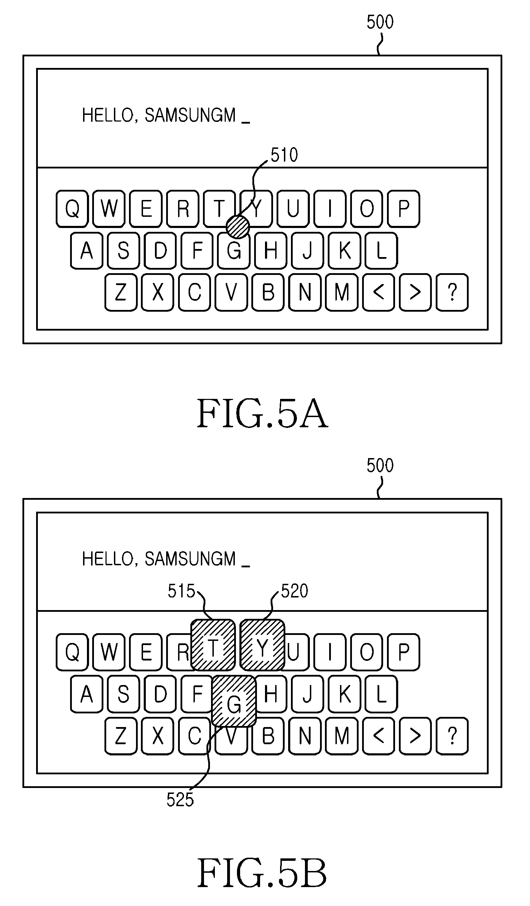

FIGURES 5A through 5C illustrate a method for processing a user input using a virtual keyboard on a touch screen according to an embodiment of the present invention.

As shown in FIGURE 5A, when a user touches one point 510 of an invalid region between keys 'T', 'Y', and 'G', referring to FIGURE 5B, the processor determines distances between the point 510 and center points of respective keys, selects keys 515, 520, and 525 in a sequence where the distances decrease, and controls the touch screen to magnify and display the keys according to the flowchart of FIGURE 2. In addition, the processor may control the touch screen to select a key such that a distance between the point 510 and center points of respective keys is within a predetermined distance and magnify and display the key. For example, when the predetermined distance is 15 pixels, the processor may determine keys whose center point coordinates are located within a distance of 15 pixels from the touch point coordinate (x_user, y_user) as a candidate group, and magnify and display the same on the touch screen.

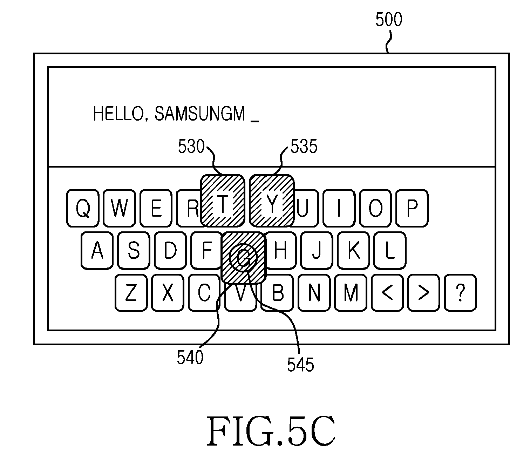

As shown in FIGURE 5C, the controller determines whether a drag occurs on keys 530, 535, and 540 magnified and displayed on the touch screen. When detecting the drag, the processor controls to change the size, brightness, or color of a key corresponding to the position at which the drag stops in order to visually discriminate the key. For example, when a user starts the drag from the key 530 and stops the drags at the key 535, the processor controls the touch screen so that the key 535 is visually discriminated. When a user starts the drag from the key 535 and stops the drag at the key 540, the processor controls the touch screen so that the key 540 is visually discriminated. In addition, the processor determines whether a release occurs after the drag. When the release occurs at a position 545, the processor controls the touch screen so that a symbol 'G' corresponding to the key 540 is displayed on a symbol display region.

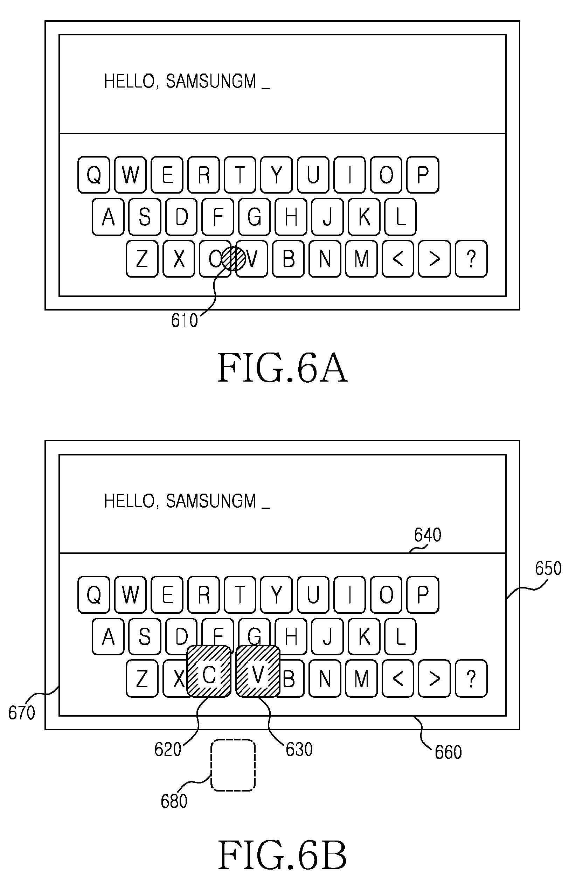

FIGURES 6A and 6B illustrate a user touching an edge of a virtual keyboard region according to an embodiment of the present invention.

As shown in FIGURE 6A, when a user touches a point 610 of the virtual keyboard, the processor controls the touch screen to magnify and display keys 620 and 630. In addition, assuming that an invisible key 680 exists outside of the touch screen when selecting keys of a candidate group to be magnified and displayed, the processor selects the candidate group and then displays only the keys 620 and 630 except the key 680 when displaying the keys on the touch screen.

Here, though only the invisible key 680 has been illustrated, an invisible key may exist in other portions outside four edges 640, 650, 660, and 670 of the virtual keyboard. In addition, the processor may determine a distance between a touch position and a center coordinate of the invisible key 680 using Equation (1) with respect to the invisible key. In addition, the processor may select candidate group keys to be magnified and displayed according to a touch position and a distance up to an invisible key, and control the touch screen to display the candidate group keys when displaying the keys on the touch screen while excluding the invisible key if the invisible key is included in the candidate group keys.

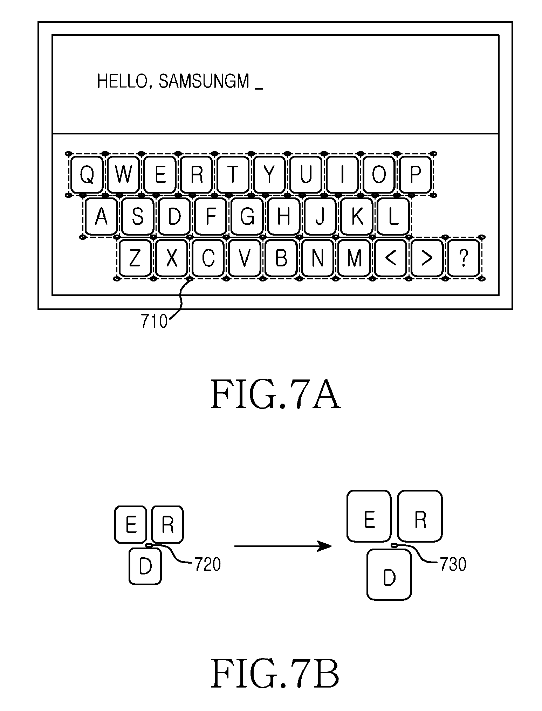

FIGURES 7A and 7B illustrate a process for magnifying and displaying on a touch screen according to an embodiment of the present invention.

As shown in FIGURE 7A, a plurality of anchor points marked by a large dot such as an anchor point 710 exist on an invalid key region of the virtual keyboard. When magnifying and displaying a plurality of keys on the touch screen, the processor magnifies and displays the plurality of keys around the anchor point existing between the plurality of keys. The processor selects an anchor point located closest to the position where the touch occurs from anchor points within a predetermined distance from the touch position, and magnifies and displays the key or keys around the selected anchor point.

As shown in FIGURE 7B, the processor controls the touch screen to magnify and display candidate group keys to be magnified and displayed around an anchor point 720. Since the keys are magnified around the anchor point 720, the position of the anchor point does not change even after the magnification, and the anchor point 720 and the anchor point 730 exist on the same position.

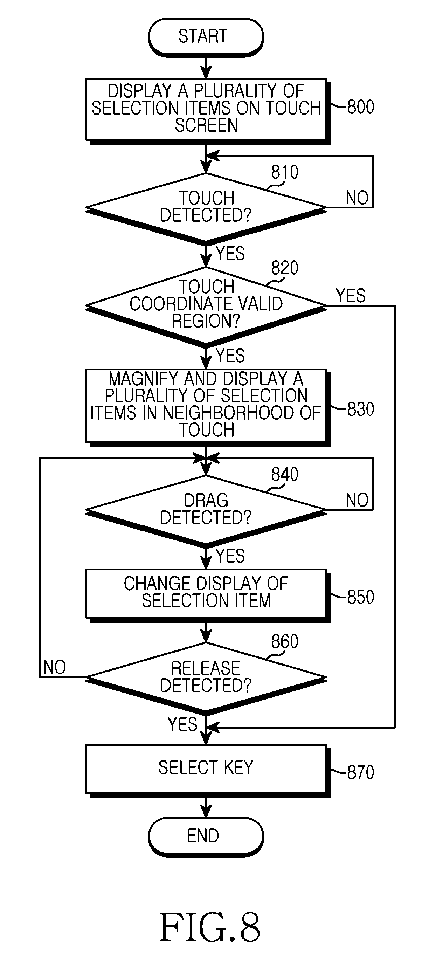

FIGURE 8 illustrates a process for processing a user input using a touch screen apparatus according to an embodiment of the present invention. FIGURE 8 illustrates a processing method where one of a plurality of selection items displayed on the touch screen is selected.

As shown in FIGURE 8, the processor displays a plurality of selection items that can be selected by a user on the touch screen in step 800. The selection items may be items which can be selected on the touch screen 120 by a user using a touch. The selection items may be a URL link, a key of a virtual keyboard, an icon, an item of a menu, an icon of a list box, an item of a combo box, and the like. For example, the selection item may be a URL link. Generally, the URL link represents an address of a website on the Internet and may be coupled to text or a graphic object.

Like a key of the virtual keyboard of FIGURE 3, each selection item may include a region on the touch screen. A region of the touch screen occupied by each selection item may be defined as a valid region, and an empty space between valid regions may be defined as an invalid region.

The processor may detect a touch occurring on the touch screen in step 810. When detecting the touch on the touch screen, the processor proceeds to step 820. For example, when a touch occurs on the touch screen, the touch screen transfers a coordinate value of the point where the touch occurs to the processor. Here, the coordinate value may be x, y coordinates or polar coordinates. When not detecting the touch in step 810, the processor may stand by until a touch is input, or perform a predetermined operation.

The processor may receive the coordinate value, determine whether the coordinate of the touch point is included in the valid region, and determine a selection item in step 820. The selection item may include a predetermined region on the touch screen. The processor determines whether the received coordinate value of the touch point is included in the valid region of each selection item.

For example, the memory 110 may store a range of a valid region corresponding to each selection item. Each selection item occupies a valid region of the touch screen 120 corresponding to the each selection item, and a coordinate value of the valid region may be stored in the memory 110.

When the received coordinate value of the touch point is included in the valid region of each selection item, the processor may determine a relevant selection item as a selection item corresponding to the position where the touch occurs in step 870.

According to an embodiment of the present invention, the processor may determine a selection item corresponding to the position where the touch occurs depending on distances between the position where the touch occurs and a plurality of selection items. Alternatively, the processor may determine a selection item located at a distance smaller than a predetermined distance from the position where the touch occurs as the selection item corresponding to the position where the touch occurs.

When detecting a touch on the touch screen, the processor may determine whether to change a display regarding one selection item or whether to change a display regarding two or more selection items of a plurality of selection items in step 820. For example, when a coordinate of a touch point is included in a valid region, the processor may determine to magnify and display one selection item. At this point, the one selection item may be a selection item corresponding to the valid region. When the coordinate of the touch point is not included in the valid region, that is, is included in an invalid region, the processor may determine to magnify and display two or more selection items of the plurality of selection items.

According to an embodiment of the present invention, when the coordinate of the touch point is included in the valid region, the processor may determine that a relevant selection item has been selected without changing a display regarding one selection item, and perform an operation corresponding thereto. When the coordinate of the touch point is not included in the valid region, that is, is included in the invalid region, the processor may determine to magnify and display two or more selection items of the plurality of selection items.

According to an embodiment of the present invention, the processor may determine a selection item corresponding to the position where the touch occurs in step 820. The processor may receive a coordinate value corresponding to the position where the touch occurs to determine a selection item corresponding to the position where the touch occurs. In addition, the processor may determine a selection item corresponding to the position where the touch occurs depending on the position where the touch occurs and distances of a plurality of respective selection items displayed on the touch screen.

When the determined selection item is one, the processor may determine to change a display regarding the determined selection item (e.g., magnify and display the selection item). Alternatively, when two or more determined selection items exist, the processor may determine to change a display regarding the determined two or more selection items (e.g., magnify and display the selection items). For example, when a coordinate of a touch point is included in an invalid region, the processor may determine to magnify and display the determined two or more selection items. Alternatively, even when the coordinate of the touch point is included in a valid region, the processor may determine two or more selection items according to a predetermined condition. In this situation, the processor may determine to magnify and display the determined two or more selection items. For example, even when the coordinate of the touch point is included in a valid region, when two or more selection items exist within a predetermined distance from a coordinate of the touch point, the processor may determine the two more selection items within the predetermined distance as selection items corresponding to the position where the touch occurs. In addition, the processor may determine to magnify and display the determined two or more items.

When determining to change a display regarding two or more selection items in step 820, the processor proceeds to step 830. Alternatively, when determining to change a display regarding one selection item in step 820, the processor proceeds to step 870. In this situation, the processor processes to select the one selection item.

When determining to change a display regarding two or more selection items in step 820, the processor may change a display regarding the two or more selection items whose display has been determined to be changed in step 830. For example, the processor may magnify and display the two or more selection items. According to an embodiment of the present invention, when selection items determined to correspond to the position where the touch occurs are two or more in step 820, the processor may change a display regarding the two or more selection items. For example, the processor may magnify and display the two or more selection items. According to an embodiment of the present invention, when determining that a coordinate of the touch point is included in an invalid region in step 820, the processor may change a display regarding two or more selection items determined to correspond to the position where the touch occurs among a plurality of selection items. For example, the processor may magnify and display the two or more selection items.

When a touch occurs in an invalid region, the processor may magnify and display a plurality of selectable selection items in the neighborhood where the touch occurs in step 830. For example, a coordinate touched by a user may be defined as (x_user, y_user), and valid regions of respective selection items may be defined as item(1), item(2), item(3), item(4),...,item(n). The processor determines whether the coordinate (x_user, y_user) is included in a region of item(1).

When the coordinate (x_user, y_user) is included in the region of item(1) as a result of the determination, the processor selects item(1) in step 820. When the coordinate (x_user, y_user) is not included in the region of item(1), the processor determines whether the coordinate (x_user, y_user) is included in the region of item(2). The processor may determine a selection item by performing this comparison.

When not determining a corresponding selection item even though the search has been made up to item(n), the processor may consider the touch coordinate (x_user, y_user) is included in an invalid region and perform step 830. The processor magnifies and displays a plurality of selection items located in the neighborhood of the touch point in step 830. For this purpose, the processor determines a distance d between the touch coordinate (x_user, y_user) and a center point coordinate of each selection item region.

When center point coordinates of respective selection items are (x_item[1], y_item[1]), (x_item[2], y_item[2]), (x_item[3], y_item[3]),..., (x_item[n], y_item[n]), the processor determines distances between center coordinates of all selection items and the coordinate value of the point touched by a user using Equation 2.
$$d[n]=sqrt(abs(x\_item[n]-x\_user)^{\wedge}2 + abs(y\_item[n]-y\_user)^{\wedge}2) \quad [Eqn. 2]$$

where abs() is an absolute value and sqrt() is a square root.

For example, a distance between item(1) and the touch point (x_user, y_user) is d[1]=sqrt(abs(x_item[1]-x_ user)^2 + abs(y_item[1]-y_user)^2), a distance between item(2) and the touch point (x_user, y_user) is d[2]=sqrt(abs (x_item[2]-x_user)^2 + abs(y_item[2]-y_user)^2), a distance between item(3) and the touch point (x_user, y_user) is d [3]=sqrt(abs(x_item[3]-x_user)^2 + abs(y_item[3]-y_user)^2), and a distance between item(n) and the touch point (x_ user, y_user) is d[n]=sqrt(abs(x_item[n]-x_user)^2 + abs(y_item[n]-y_user)^2).

Assuming that the number of selection items to be magnified and displayed is m, the processor may select m from d[1], d[2],d[3],...,d[n] between the coordinate (x_user, y_user) of the point touched by a user and center point coordinates of respective selection items in a sequence such that the distances decrease, and magnify and display m on the touch screen. For example, when d[1]<d[n-1]<d[3]<d[n-5]<... and the number m of selection items to be magnified and displayed is 3, the processor may select d[1],d[n-1], and d[3], determine corresponding three selection items as a candidate group, and magnify and display the same on the touch screen.

In addition, the processor may control to select selection items located within a predetermined distance from d[1],d[2],d[3],...,d[n], which are distances between the coordinate (x_user, y_user) of the touched point and the center point coordinates of respective key regions, and magnify and display the same on the touch screen. In addition, the processor may determine whether a drag occurs on the magnified and displayed two or more selection items in step 840.

When the drag occurs on the magnified and displayed two or more selection items, the processor may change a display regarding some of the magnified and displayed two or more selection items depending on a direction and/or a distance of the drag in step 850.

For example, the processor may change the color, light and shade, shape, size, and the like, of some of selection items. When detecting the drag, the processor may further magnify the size, change the color, or change the brightness in order to visually discriminate the selection item corresponding to the position at which the drag stops from magnified and displayed other selection items in step 850. The processor determines whether a release that releases a touch occurs in step 850.

When a release occurs, the processor selects a selection item corresponding to the position where the release occurs in step 870. When some of selection items whose display has changed by the drag is one and a release occurs on the some of selection items, the processor may process that some of selection items has been selected in step 870.

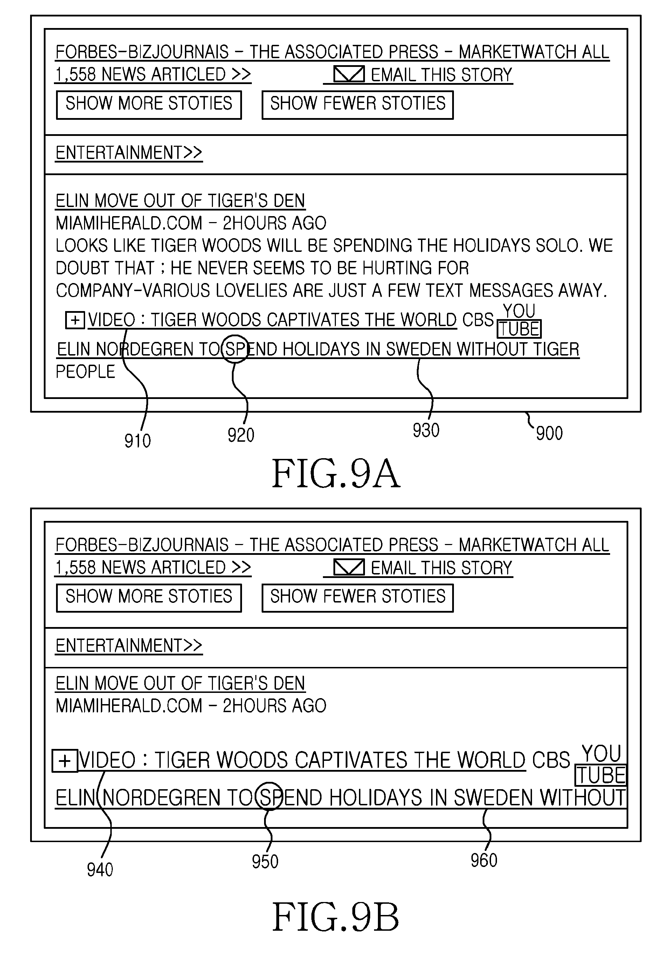

FIGURES 9A and 9B illustrate a method for processing a user input that selects one of a plurality of selection items on a touch screen where the plurality of selection items are displayed according to an embodiment of the present invention.

As shown in FIGURE 9A, the touch screen 900 displays a plurality of selection items 910 and 930. In FIGURE 9A, selection items 910 and 930 are URL links. These URL links are related to text, an image, a moving image, and the like, and may be displayed as the text, image, moving image, and the like, on the touch screen.

At this point, a user touches a position 920 on the touch screen 900. Then, the processor may determine a selection item corresponding to the position 920 where the touch occurs. A display of the touch screen 900 when the determined selection items are two or more is illustrated in FIGURE 9B. Since the selection items 910 and 930 determined by the processor are two or more, the processor magnifies and displays the selection items 910 and 930 as selection items 940 and 960 of FIGURE 9B.

Then, the user performs a drag on the magnified selection items 940 and 960 to move a touch 950 toward the selection item which the user desires to select. The processor may more accurately select the selection item which the user desires to select from the magnified selection items 940 and 960 using the touch 950 that moves again. For example, when the user drags the touch 950 toward the selection item 960 in FIGURE 9B, the processor changes a display regarding the selection item 960. For example, the processor may change the color or light and shade of the selection item 960. Then, the user may determine whether the selection item 960 which the user desires to select has been accurately selected through this and release the touch. When the touch is released, the processor processes that the selection item 960 displayed as a selection candidate when the touch is released has been selected.

According to an embodiment of the present invention, the processor may change a display regarding a plurality of selection items according to a drag. For example, when the touch occurs on the touch screen, when four selection items (e.g., selection items A, B, C, and D) corresponding to the position where the touch occurs are determined, the processor magnifies and displays the four selection items. In addition, the processor may change a display (e.g., change color) regarding three selection items (e.g., the selection items B, C, and D) according to a first drag, and change again the display in order to represent that one selection item (e.g., the selection item C) has been finally selected according to the continued drag. For example, when magnifying and displaying the four selection items A, B, C, and D first, the processor displays Color_1 for the four selection items, displays Color_2 for the three selection items B, C, and D, and maintains Color_1 for the selection item A according to the next drag. In addition, when the selection item C is finally determined according to the continued drag, the processor may display the selection item C using Color_2, and change the selection items B and C using Color_1.

According to an embodiment of the present invention, when a user touches the position 920 on the touch screen 900, the processor may determine whether the touch occurs on a valid region. When the touch occurs in an invalid region, the processor magnifies and displays URL links 940 and 960 in the neighborhood of the position 950 where the touch occurs.

As described above, exemplary embodiments of the present invention have an advantage of performing a user input faster and more conveniently through the touch screen. Therefore, exemplary embodiments of the present invention may be utilized for an electronic apparatus that uses the touch screen.

The above-described methods may be realized in the form of a program command executable through various computer units and recorded on a computer-readable medium. The computer-readable medium may include a program command, a data file, a data structure, and the like, in a single form or in combination. The program command recorded on the medium may be specially designed and configured for the present invention or known and available to a person of ordinary skill in the field of computer software. Examples of the computer-readable medium include a hard disk, a floppy disk, magnetic media such as a magnetic tape, optical media such as a CD-ROM, DVD, magneto-optical media such as a floptical disk, and hardware units specially configured to store and execute program commands such as ROM, RAM, and a flash memory. Examples of the program command include not only machine language codes generated by a compiler but also a high-level language code executed by a computer using an interpreter. The above-described hardware units may be configured to operate as one or more software modules to perform an operation of the present invention, and vice versa.

According to an embodiment of the present invention, a user input through a touch screen may be performed faster and more conveniently.

According to an embodiment of the present invention, a user may easily find and accurately input a desired letter, and also, easily and accurately select one from a plurality of selection items.

Although the invention has been shown and described with reference to certain exemplary embodiments thereof, it will be understood by those skilled in the art that various changes in form and details may be made therein without departing from the spirit and scope of the invention as defined by the appended claims and their equivalents. Therefore, the scope of the present invention should not be limited to the above-described embodiments but should be determined by not only the appended claims but also the equivalents thereof.

For example, though magnifying and displaying a key or a selection item has been primarily described as an example of changing display regarding a key or a selection item, the present invention is not limited thereto. Changing various forms such as the color, shape, or light and shade of the key or the selection item may be employed. In addition, magnifying and displaying a key or a selection item in the above embodiments is not limited to magnifying and displaying the key or the selection item while simply maintaining the key or the selection item, but includes magnifying the size while changing the shape of the key, or magnifying the size while changing the shape or color of a letter and/or a number marked on the key.

**Claims**

1. A touch screen apparatus, the apparatus comprising:

    a touch screen (120) adapted to display a virtual keyboard comprising a plurality of keys; and
    a processor (130) adapted to determine whether to magnify and display one key or whether to magnify and display two or more keys of the plurality of keys when a touch occurs on the virtual keyboard.

2. The touch screen apparatus of claim 1, wherein when a drag occurs on the magnified and displayed two or more keys, the processor (130) visually differently displays one of the magnified and displayed two or more keys according to a distance or a direction of the drag.

3. The touch screen apparatus of claim 2, wherein when a release occurs from the visually differently displayed one key, the processor (130) displays a symbol corresponding to the one key on a region of the touch screen that excludes the virtual keyboard.

**4.** The touch screen apparatus of claim 1, wherein:

when the touch occurs, the processor (130) receives a coordinate value corresponding to a position where the touch occurs from the touch screen to search for a key corresponding to the position where the touch occurs; when one key corresponding to the position where the touch occurs is found as a result of the search, the processor (130) magnifies and displays the found one key; and when one key corresponding to the position where the touch occurs is not found as a result of the search, the processor (130) determines two or more keys of the plurality of keys and magnifies and displays the two or more keys according to the position where the touch occurs and distances of the plurality of respective keys of the virtual keyboard.

**5.** The touch screen apparatus of claim 4, wherein when the one key corresponding to the position where the touch occurs is not found as a result of the search, the processor (130) magnifies and displays a predetermined number of keys located at a distance close to the position where the touch occurs.

**6.** The touch screen apparatus of claim 1, wherein the processor (130) magnifies and displays two or more keys of the plurality of keys around an anchor point existing between the two or more keys.

**7.** The touch screen apparatus of claim 6, wherein the anchor point existing between the two or more keys comprises a closest anchor point of anchor points existing within a predetermined distance from the position where the touch occurs.

**8.** A method for processing an input in a touch screen apparatus, the method comprising:

displaying a virtual keyboard comprising a plurality of keys; and determining whether to magnify and display one key or whether to magnify and display two or more keys of the plurality of keys when a touch occurs on the virtual keyboard.

**9.** The method of claim 8, wherein the determining of whether to magnify and display one key or whether to magnify and display two or more keys of the plurality of keys when the touch occurs on the virtual keyboard comprises:

when a drag occurs on the magnified and displayed two or more keys, visually differently displaying one of the magnified and displayed two or more keys according to a distance or a direction of the drag.

**10.** The method of claim 9, further comprising, when a release occurs on the visually differently displayed one key, displaying a symbol corresponding to the one key on a region of the touch screen that excludes the virtual keyboard.

**11.** The method of claim 8, wherein the determining of whether to magnify and display one key or whether to magnify and display two or more keys of the plurality of keys when the touch occurs on the virtual keyboard comprises:

when the touch occurs, receiving a coordinate value corresponding to a position where the touch occurs to search for a key corresponding to the position where the touch occurs; when one key corresponding to the position where the touch occurs is found as a result of the search, magnifying and displaying the found one key; and when one key corresponding to the position where the touch occurs is not found as a result of the search, determining two or more keys of the plurality of keys according to the position where the touch occurs and distances of the plurality of respective keys on the virtual keyboard, and magnifying and displaying the two or more keys.

**12.** The method of claim 11, further comprising, when the one key corresponding to the position where the touch occurs is not found as a result of the search, magnifying and displaying a predetermined number of keys located close to the position where the touch occurs.

**13.** The method of claim 8, further comprising magnifying and displaying two or more keys of the plurality of keys around an anchor point existing between the two or more keys.

**14.** The method of claim 13, wherein the anchor point existing between the two or more keys comprises a closest anchor point of anchor points within a predetermined distance from the position where the touch occurs.

100

MEMORY
110

PROCESSOR
130

TOUCH
SCREEN
120

FIG.1

START

DISPLAY VIRTUAL KEYBOARD ON TOUCH SCREEN —210

220
TOUCH DETECTED? ——NO

YES

SEARCH KEY —230

240
CORRESPONDING KEY SEARCH SUCCESSFUL? ——YES

YES

SEARCH FOR CANDIDATE GROUP KEY AND MAGNIFY THE SAME —250

MAGNIFY AND DISPLAY CORRESPONDING KEY —260

270
DRAG DETECTED? ——NO

YES

CHANGE KEY DISPLAY —280

290
NO—— RELEASE DETECTED?

YES

SELECT KEY —295

END

FIG.2

340     300

HELLO, SAMSUNGM _

310   320   330

Q W E R T Y U I O P
A S D F G H J K L
Z X C V B N M < > ?

# FIG.3A

350

HELLO, SAMSUNGM _

360       355

Q W E R T Y U I O P
A S D F G H J K L
Z X C V B N M < > ?

370    380

375   W   E   385

     360

390
395   S   D

# FIG.3B

400

HELLO, SAMSUNGM _

Q W E R T Y U I O P
A S D F G H J K L
Z X C V B N M < > ?

410

# FIG.4A

400

HELLO, SAMSUNGM _

Q W E R T Y U I O P
A S D F G H J K L
Z X C V B N M < > ?

420

# FIG.4B

500

HELLO, SAMSUNGM _

510

Q W E R T Y U I O P

A S D F G H J K L

Z X C V B N M < > ?

# FIG.5A

500

HELLO, SAMSUNGM _

515    520

Q W E R T Y U I O P

A S D F G H J K L

Z X C V B N M < > ?

525

# FIG.5B

500

HELLO, SAMSUNGM _

530    535

Q W E R T Y U I O P
A S D F G H J K L
Z X C V B N M < > ?

540    545

# FIG.5C

HELLO, SAMSUNGM _

Q W E R T Y U I O P
A S D F G H J K L
Z X C V B N M < > ?

610

## FIG.6A

HELLO, SAMSUNGM _

640

650

Q W E R T Y U I O P
A S D F G H J K L
Z X C V B N M < > ?

670

620    630    660

680

## FIG.6B

FIG.7A

FIG.7B

START

DISPLAY A PLURALITY OF
SELECTION ITEMS ON TOUCH
SCREEN — 800

TOUCH
DETECTED? — 810 — NO

YES

TOUCH
COORDINATE VALID
REGION? — 820 — YES

YES

MAGNIFY AND DISPLAY A
PLURALITY OF SELECTION
ITEMS IN NEIGHBORHOOD OF
TOUCH — 830

DRAG
DETECTED? — 840 — NO

YES

CHANGE DISPLAY OF
SELECTION ITEM — 850

NO — RELEASE
DETECTED? — 860

YES

SELECT KEY — 870

END

FIG.8

FORBES–BIZJOURNAIS – THE ASSOCIATED PRESS – MARKETWATCH ALL 1,558 NEWS ARTICLED >>  ☒ EMAIL THIS STORY

SHOW MORE STOTIES    SHOW FEWER STOTIES

ENTERTAINMENT>>

ELIN MOVE OUT OF TIGER'S DEN
MIAMIHERALD.COM – 2HOURS AGO
LOOKS LIKE TIGER WOODS WILL BE SPENDING THE HOLIDAYS SOLO. WE DOUBT THAT ; HE NEVER SEEMS TO BE HURTING FOR COMPANY–VARIOUS LOVELIES ARE JUST A FEW TEXT MESSAGES AWAY.
⊞ VIDEO : TIGER WOODS CAPTIVATES THE WORLD CBS YOU TUBE
ELIN NORDEGREN TO SPEND HOLIDAYS IN SWEDEN WITHOUT TIGER
PEOPLE

910    920    930    900

## FIG.9A

FORBES–BIZJOURNAIS – THE ASSOCIATED PRESS – MARKETWATCH ALL 1,558 NEWS ARTICLED >>  ☒ EMAIL THIS STORY

SHOW MORE STOTIES    SHOW FEWER STOTIES

ENTERTAINMENT>>

ELIN MOVE OUT OF TIGER'S DEN
MIAMIHERALD.COM – 2HOURS AGO

⊞ VIDEO : TIGER WOODS CAPTIVATES THE WORLD CBS YOU TUBE
ELIN NORDEGREN TO SPEND HOLIDAYS IN SWEDEN WITHOUT

940    950    960

## FIG.9B